# EUROPEAN PATENT APPLICATION

(11) **EP 4 847 169 A1**
(43) Date of publication of application: **02.12.2026**
(21) Application number: 25227853.6
(22) Date of filing: 31.12.2025
(51) Int. Cl.: B22F 10/28, B22F 10/362, B22F 12/13, B22F 12/00, B22F 12/50, B22F 12/80, B29C 64/153, B33Y 30/00, B33Y 40/10, B22F 12/30, B29C 64/321, B29C 64/205

(54) **DEVICE AND METHOD FOR ADDITIVE MANUFACTURING IN LUNAR ENVIRONMENT**

(30) Priority: 30.05.2025 CN 202510716606
(71) Applicant: Huazhong University of Science and Technology, Wuhan, Hubei 430074 (CN); Wuhan University Of Technology, Wuhan, Hubei 430070 (CN)
(72) Inventor: Yan, Chunze, Wuhan, 430074 (CN); Chen, Peng, Wuhan, 430070 (CN); Jiang, Chengao, Wuhan, 430074 (CN); Zhang, Lu, Wuhan, 430070 (CN); Hu, Zhao, Wuhan, 430070 (CN); Shi, Yusheng, Wuhan, 430074 (CN)
(74) Representative: Straus, Alexander

(57) **Abstract**

Disclosed are a device and method for additive manufacturing under a lunar environment. The device for additive manufacturing under the lunar environment includes a frame, a vibration component, a centrifugal disk, a powder feeding tube, a worktable and a high-energy beam device. The vibration component includes a classifying sieve and a vibration motor. The classifying sieve is fixed on the frame. The vibration motor is mounted on a side surface of the classifying sieve. The centrifugal disk is fixed on the frame and located below the classifying sieve. The centrifugal disk is provided with a discharge outlet connected to the powder feeding tube along a tangential direction. The worktable is moveable along an X-axis direction, a Y-axis direction and a Z-axis direction. The high-energy beam device is located above the worktable.

## Description

### CROSS-REFERENCE TO RELATED APPLICATION

This application claims the priority benefit of China application serial no. 202510716606.3, filed on May 30, 2025. The entirety of the above-mentioned patent application is hereby incorporated by reference herein and made a part of this specification.

### BACKGROUND

### Technical Field

The present disclosure relates to additive manufacturing technology, and particularly relates to an additive manufacturing device and process under lunar environment.

### Description of Related Art

In-situ construction on lunar surface is a critical technological support for the future establishment of lunar research stations. Among various construction techniques, additive manufacturing emerges as a particularly promising method for in-situ lunar construction. This technique allows for the direct reproduction of structural entities based on three-dimensional models, making such technique highly suitable for personalized construction needs of lunar bases. However, given the limited resources available on the lunar surface and the effective payload capacity of a single rocket, lunar construction requires an exceptionally high in-situ resource utilization rate (greater than 98%). This means that more than 98% of the construction materials must be sourced from the lunar environment. Consequently, excluding adhesives and other additives, only high-energy beam processing devices (such as laser, electron beam, electric arc, and focused solar light) within the existing additive manufacturing techniques can meet the required in-situ resource utilization standards.

The performance of components processed by high-energy beam devices is highly dependent on the forming environment. The lunar environment, characterized by high vacuum, low gravity, significant temperature variations, and frequent moonquakes, fundamentally differs from construction in terrestrial environments. High-energy beams, such as lasers, require continuous and stable powder feed during scanning to complete the printing operation and avoid the formation of void defects. The low gravity and high vacuum conditions on the lunar surface present significant challenges to powder feeding.

The conventional method of powder delivery primarily involves high-speed gas flow to ensure stability and continuity. However, this method is difficult to implement in the lunar environment. Consequently, existing technologies propose the use of an electrostatic collection and transport delivery component based on electric fields to sequentially sieve, collect, manipulate, transport, and spray lunar soil powder. Nonetheless, the composition of lunar soil powder is complex, and the chargeability of particles is uncontrollable. Under the influence of electric field forces, for most ordinary lunar soil powders, it is challenging to overcome the friction and gravity present in the lunar soil transport process, thereby failing to produce a high-speed stable jet. As a result, it is difficult to ensure the stability, continuity, and quantity of powder delivery.

### SUMMARY

In view of the foregoing, the present disclosure provides an additive manufacturing device and method for use in the lunar environment. The present disclosure aims to address the technical challenges posed by the low gravity and high vacuum conditions on the lunar surface, which result in significant difficulties in powder delivery, and make it challenging to ensure the stability, continuity, and quantity of powder delivery as highlighted in the Description of Related Art.

The technical solution of the present disclosure is implemented as follows:

In a first aspect, the present disclosure provides an additive manufacturing device under a lunar environment, including a frame, a vibration component, a centrifugal disk, a powder feeding tube, a worktable and a high-energy beam device, wherein:

The vibration component includes a classifying sieve and a vibration motor. The classifying sieve is fixed on the frame, the vibration motor is mounted on a side surface of the classifying sieve;

The centrifugal disk is fixed on the frame and located below the classifying sieve, configured to receive lunar soil powder separated by the classifying sieve, the centrifugal disk is provided with a discharge outlet connected to the powder feeding tube along a tangential direction;

The powder feeding tube is configured to provide the separated lunar soil powder to a specified machining position at fixed coordinates;

The worktable is moveable along an X-axis direction, a Y-axis direction and a Z-axis direction in order to be positioned at the specified machining position;

The high-energy beam device is located above the worktable and is configured to emit a high-energy beam to perform synchronous additive manufacturing on the lunar soil powder on the worktable.

On basis of the above technical solution, preferably, the high-energy beam device may emit a first light spot and a second light spot. The first light spot has a diameter of 1mm to 40mm, provided for real-time preheating of the worktable or a deposited layer of the lunar soil powder; the second light spot has a diameter of 0.1mm to 1mm, provided for agglomeration and melting processing of the lunar soil powder.

On basis of the above technical solution, preferably, an output range of an energy melting ratio of the high-energy beam is 0.1 to 1000, wherein the energy melting ratio is a ratio of a high-energy beam energy density to an energy required for melting the lunar soil powder per unit volume.

On basis of the above technical solution, preferably, two vibration motors are provided, and the two vibration motors are symmetrically mounted on both sides of the classifying sieve with opposite rotation directions.

On basis of the above technical solution, preferably, the classifying sieve includes a sieve frame and multiple sieve meshes. The multiple sieve meshes are arranged from top to bottom along an inner wall of the sieve meshes. A diameter of the upper sieve mesh is larger than a diameter of the lower sieve mesh. The sieve frame is provided with a waste material outlet, and the waste material outlet is located above the uppermost sieve mesh.

On basis of the above technical solution, preferably, the classifying sieve further includes diversion channels and heating pipes provided in the same number as that of the sieve meshes. The diversion channels are provided on an outer wall of the sieve frame and communicate with the interior of the sieve frame. The diversion channels are located below the corresponding sieve meshes to separate the lunar soil powder of different particle sizes, wherein one of the diversion channels is connected to the centrifugal disk, and the heating pipes are mounted by sleeving on the exterior of the diversion channels.

On basis of the above technical solution, preferably, the diameter of the sieve mesh is 10um to 500um, and an inclination angle of the sieve mesh with respect to a horizontal plane is 0 degree to 60 degrees.

On basis of the above technical solution, preferably, the centrifugal disk includes a turntable, a feeding inlet and the discharge outlet. A centrifugal chamber is provided inside the turntable. The feeding inlet is located at the center of the top of the turntable and communicates with the centrifugal chamber. The feeding inlet is connected with an outlet of the classifying sieve. The discharge outlet is located at an outer edge of the turntable. The discharge outlet is provided with a switch. The switch is configured to open the discharge outlet after the turntable reaches an operational speed.

In a second aspect, the present disclosure provides an additive manufacturing method under the lunar environment, using the additive manufacturing device under the lunar environment as described in the first aspect, including:

The vibration motor actuates the classifying sieve to induce vibrations, thereby enabling the classifying sieve to sieve raw lunar soil or simulated lunar soil. This process quantitatively conveys the lunar soil powder of specified particle sizes to the centrifugal disk;

The lunar soil powder is subjected to centrifugal pressurization via the centrifugal disk and subsequently conveyed through the discharge outlet to the specified machining position at the fixed coordinates;

The worktable moves along a X-Y direction to the specified machining position, where synchronous additive manufacturing is performed at the fixed coordinates through the high-energy beam;

Upon the completion of the deposition of a layer of the lunar soil powder, the worktable is lowered by the thickness of one layer. The above steps are repeated to accomplish the additive manufacturing of the entire component to be processed.

On basis of the above technical solution, preferably, the step of performing synchronous additive manufacturing at the fixed coordinates through the high-energy beam includes: performing real-time preheating of the worktable or the deposited layer of the lunar soil powder through the first light spot, performing agglomeration and melting processing of the lunar soil powder through the second light spot; the diameter of the first light spot is 1mm to 40mm, and the diameter of the second light spot is 0.1mm to 1mm.

The device and method for additive manufacturing under the lunar environment of the present disclosure has the following advantageous effects compared to the related art:
(1) By utilizing the centrifugal force of the centrifugal disk, the lunar soil powder is imparted with linear velocity, which, on one hand, is unaffected by gravity, airflow, and other vacuum environment factors, and, on the other hand, allows the powder delivery speed to be regulated by adjusting the operational speed of the centrifugal disk. The quantity of powder delivered and the particle size of the lunar soil may be quantitatively controlled through the vibration motor and the classifying sieve. The components for powder supply, such as the vibration component, the centrifugal disk, and air supply pipe, as well as the high-energy beam device, remain stationary while the worktable moves. This arrangement minimizes the instability and discontinuity of powder delivery, as well as the vibration-induced forming errors caused by the excessive weight of the high-energy beam device, thereby avoiding defects arising from powder delivery and forming processes. This ensures the long-term stability of powder delivery effectively.
(2) The high-energy beam device is capable of emitting the first light spot and the second light spot. The first light spot performs real-time preheating on the worktable or on the already deposited layer of the lunar soil powder. The second light spot is provided for the agglomeration and melting processing of the lunar soil powder, thereby minimizing the temperature gradient and internal stress to ensure processing without cracks or deformation.
(3) By collaborating process parameters such as the filling power, the number of scans within the same area, the scan spacing, and the filling speed, the output range of the energy melting ratio of the high-energy beam is regulated to be from 0.1 to 1000. This optimization aims to minimize the temperature gradient and internal stress to the greatest extent possible, thereby ensuring processing without cracks or deformation.
(4) The device is equipped with two vibration motors, which are symmetrically mounted on both sides of the classifying sieve, with opposite rotation directions. This configuration is designed to offset an excitation force in a horizontal direction while superimposing the excitation forces in a vertical direction, thereby enhancing the vibration effect.
(5) The diversion channels are configured on the outer wall of the sieve frame and connects to the interior of the sieve frame. The diversion channels are located beneath the corresponding sieve meshes to separate the lunar soil powder of different particle sizes. One of the diversion channels is connected to the centrifugal disk, conveying the lunar soil powder of a specified particle size to the centrifugal disk. The heating pipes are mounted around the diversion channels, heating the sieved powder before output to serve as a preheating function.

### BRIEF DESCRIPTION OF THE DRAWINGS

For clearer illustration of the technical solutions in the embodiments of the present disclosure or the related art, the following will briefly introduce the drawings required for use in the description of the embodiments or the related art. Clearly, the drawings described below are merely some embodiments of the present disclosure. For those of ordinary skill in the art, other drawings may also be obtained according to these drawings without creative effort.
FIG. 1 is a structural diagram of a device for additive manufacturing under a lunar environment in an embodiment of the present disclosure;
FIG. 2 is a flow schematic diagram of a method for additive manufacturing under the lunar environment in an embodiment of the present disclosure;
FIG. 3 is a schematic diagram of an internal cross-section of a printed part in an embodiment of the present disclosure.

### DESCRIPTION OF THE EMBODIMENTS

The technical solutions in the embodiments of the present disclosure will be clearly and completely described below in conjunction with the embodiments of the present disclosure. Clearly, the described embodiments are only part of the embodiments of the present disclosure, not all embodiments. Based on the embodiments in the present disclosure, all other embodiments obtained by those of ordinary skill in the art without creative effort fall within the scope to be protected by the present disclosure.

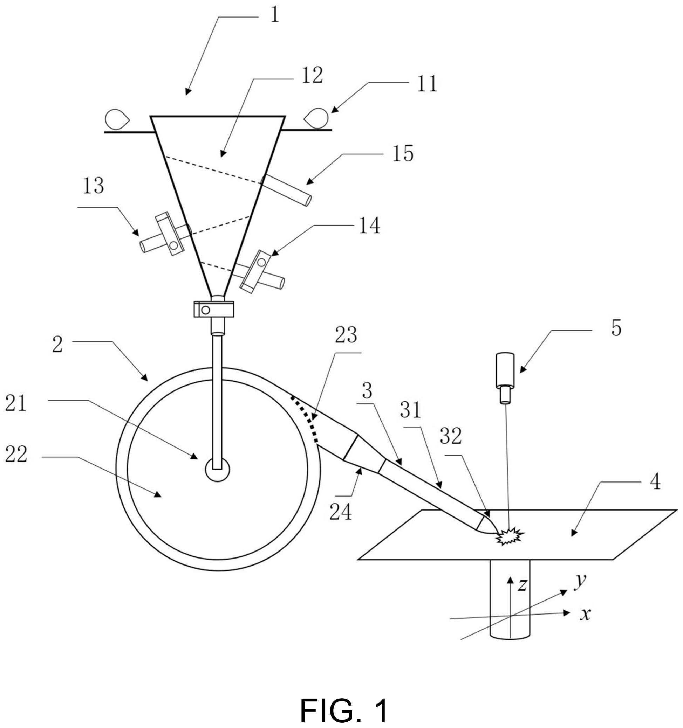

Referring to FIG. 1 to FIG. 3, a first aspect of an embodiment of the present disclosure provides a device for additive manufacturing under a lunar environment. The device includes a frame, a vibration component 1, a centrifugal disk 2, a powder feeding tube 3, a worktable 4, and a high-energy beam device 5, wherein:

The vibration component 1 includes a classifying sieve 11 and a vibration motor 12. The classifying sieve 11 is fixed on the frame. The vibration motor 12 is mounted on a side surface of the classifying sieve 11. The classifying sieve 11 includes a sieve frame 111 and multiple sieve meshes 112. The multiple sieve meshes 112 are arranged from top to bottom along an inner wall of the sieve meshes 112. A diameter of the upper sieve mesh 112 is larger than a diameter of the lower sieve mesh 112. The diameter of the sieve mesh 112 is 10um to 500um. An inclination angle of the sieve mesh 112 with respect to a horizontal plane is adjustable from 0 degree to 60 degrees. The sieve frame 111 is provided with a waste material outlet 115. The waste material outlet 115 is located above the uppermost sieve mesh 112, and unclassified waste material is discharged from the waste material outlet 115. Two vibration motors 12 are provided, the two vibration motors 12 are symmetrically mounted on both sides of the sieve frame 111, with opposite rotation directions. The opposite rotation directions here mean opposite rotation directions when viewed from the same side, so as to cancel an excitation force in a horizontal direction, superimpose excitation forces in a vertical direction, ensure a normal motion trajectory of the sieve frame 111, and adjust the vibration frequency and amplitude.

The centrifugal disk 2 is fixed on the frame and located below the classifying sieve 11, configured to receive the lunar soil powder separated by the classifying sieve 11. The centrifugal disk 2 is provided with a discharge outlet 23 connected to the powder feeding tube 3 along a tangential direction.

The powder feeding tube 3 is provided for supplying the separated lunar soil powder to a specified machining position at fixed coordinates. The powder feeding tube 3 is provided with a nozzle 31 at a terminal end thereof. The powder feeding tube 3 has a diameter of 1mm to 100mm, and a spray hole of the nozzle 31 has a diameter of 100µm to 2000µm.

The worktable 4 is moveable along an X-axis direction, a Y-axis direction and a Z-axis direction to move to the specified machining position. The worktable 4 is separately provided with a moving component below. During the machining process, the moving component drives the worktable 4 to move along the X-axis and Y-axis directions in the horizontal plane to realize the laying of the lunar soil powder. After laying one layer of the lunar soil powder, the worktable 4 descends along the Z-axis direction by one-layer thickness.

The high-energy beam device 5 is located above the worktable 4, and is configured to emit a high-energy beam to perform synchronous additive manufacturing on the lunar soil powder on the worktable 4. Types of high-energy beams may include one or a combination of the following: laser, electron beam, electric arc, concentrated solar light, or microwaves. A yttrium aluminum garnet laser is provided as the energy source of the high-energy beam device.

In the additive manufacturing device under the lunar environment provided in this embodiment, by utilizing the centrifugal force of the centrifugal disk 2, the lunar soil powder is imparted with linear velocity, which, on one hand, is unaffected by gravity, airflow, and other vacuum environment factors, and, on the other hand, allows the powder delivery speed to be regulated by adjusting the operational speed of the centrifugal disk 2. The quantity of powder delivered and the particle size of the lunar soil may be quantitatively controlled through the vibration motor 12 and the classifying sieve 11. The components for powder supply, such as the vibration component 1, the centrifugal disk 2, and the air supply pipe, as well as the high-energy beam device 5, remain stationary while the worktable 4 moves. This arrangement minimizes the instability and discontinuity of powder delivery, as well as the vibration-induced forming errors caused by the excessive weight of the high-energy beam device 5, thereby avoiding defects arising from powder delivery and forming processes. This ensures the long-term stability of powder delivery effectively.

In some embodiments, the high-energy beam device 5 is capable of emitting a first light spot and a second light spot. The first light spot has a diameter of 1mm to 40mm, provided for real-time preheating of the worktable 4 or a deposited layer of the lunar soil powder; the second light spot has a diameter of 0.1mm to 1mm, provided for agglomeration and melting processing of the lunar soil powder. By utilizing the first light spot provided for real-time preheating of the worktable 4 or the deposited layer of the lunar soil powder and the second light spot provided for agglomeration and melting processing of the lunar soil powder, it is possible to minimize the temperature gradient and internal stress to ensure processing without cracks or deformation.

In some embodiments, an output range of an energy melting ratio of the high-energy beam is 0.1 to 1000. An energy melting ratio Eₘᵣ is a ratio of a high-energy beam energy density ${E}_{d}^{vol}$ to an energy Eₘ required for melting the lunar soil powder per unit volume. The energy melting ratio Eₘᵣ is calculated by the following formula:
${E}_{mr} = \frac{{E}_{d}^{vol}}{{E}_{m}} = \frac{P ∗ C}{S ∗ V ∗ h \left[{C}_{p}\left({T}_{m}^{0}-{T}_{b}\right)+Δ{H}_{m}\right] ∗ {P}_{d}} ;$

In the above formula, P is a filling power of the high-energy beam, C is the number of scans within the same area, S is a scan spacing, V is a filling speed, h is a layer thickness, Cₚ is a specific heat capacity, ${T}_{m}^{0}$ is an equilibrium melting point, T_{b} is an ambient temperature, Δ*Hₘ* is a melting enthalpy, P_{d} is an apparent bulk density of the lunar soil powder.

Through collaborating process parameters such as the filling power, the number of scans within the same area, the scan spacing, and the filling speed, the output range of the energy melting ratio of the high-energy beam is regulated to be from 0.1 to 1000. This optimization makes it possible to minimize the temperature gradient and internal stress to the greatest extent possible, thereby ensuring processing without cracks or deformation.

In some embodiments, the classifying sieve 11 further includes diversion channels 113 and heating pipes 114 provided in the same number as that of the sieve meshes 112. The diversion channels 113 are provided on an outer wall of the sieve frame 111 and communicate with the interior of the sieve frame 111. The diversion channels 113 are located below the corresponding sieve meshes 112 to separate the lunar soil powder of different particle sizes, wherein one of the diversion channels 113 is connected to the centrifugal disk 2, and the heating pipes 114 are mounted by sleeving on the exterior of the diversion channels 113. Specifically, as shown in FIG. 1, in the present embodiment, there are a first layer of sieve mesh 112, a second layer of sieve mesh 112 and a third layer of sieve mesh 112 from top to bottom in sequence. The three layers of sieve meshes 112 with inclination angles of 45°, 135°, 45° respectively are alternately placed from top to bottom. The diameters of the three layers of sieve meshes 112 are 200µm, 100µm, 50µm respectively from top to bottom. The first diversion channel 113 is located between the first layer of sieve mesh 112 and the second layer of sieve mesh 112, and is located at a lower inclined end of the second layer of sieve mesh 112 to output the lunar soil powder of a first particle size. The second diversion channel 113 is located between the second layer of sieve mesh 112 and the third layer of sieve mesh 112, and is located at a lower inclined end of the third layer of sieve mesh 112 to output the lunar soil powder of a second particle size. The bottommost diversion channel 113 has one end mounted at the bottom of the sieve frame 111, and the other end connected to the centrifugal disk 2, thereby conveying the lunar soil powder with a particle size below 50µm to the centrifugal disk 2. The heating pipes 114 heat the powder obtained after sieving before output, serving the preheating function.

In some embodiments, the centrifugal disk 2 includes a turntable 21, a feeding inlet 22 and the discharge outlet 23. A centrifugal chamber is provided inside the turntable 21. The centrifugal chamber is sealed in a closed configuration. The feeding inlet 22 is located at the center of the top of the turntable 21 and communicates with the centrifugal chamber. The feeding inlet 22 is connected with an outlet of the classifying sieve 11, which allows for the quantitative collection of the sieved lunar soil powder. The discharge outlet 23 is located at an outer edge of the turntable 21. The discharge outlet 23 is provided with a switch. In the event that a specified operational speed is not achieved, and upon the conclusion of the processing, the discharge outlet 23 remains in a closed state. The switch is configured to open the discharge outlet 23 after the turntable 21 reaches the operational speed. An operational speed control range of the turntable 21 is 0rpm to 100000rpm. A terminal end of the discharge outlet 23 is configured with a connector 24, thereby being connected to the powder feeding tube 3 through the connector 24.

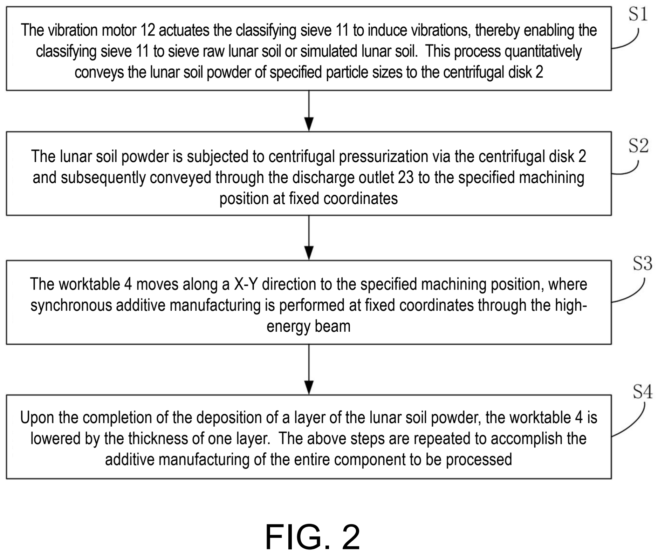

Based on the same concept, a second aspect of an embodiment of the present disclosure, in conjunction with FIG. 2, provides a method for additive manufacturing under the lunar environment, using the additive manufacturing device under the lunar environment as described in the first aspect of the embodiment, including:

Step S1: The vibration motor 12 actuates the classifying sieve 11 to induce vibrations, thereby enabling the classifying sieve 11 to sieve raw lunar soil or simulated lunar soil. This process quantitatively conveys the lunar soil powder of specified particle sizes to the centrifugal disk 2.

In step S1, a vibration frequency of the vibration motor 12 is 100Hz. The lunar soil powder flows out efficiently and quantitatively in the diversion channels 113 at different heights to obtain powder with a specified particle size range, and then the powder is conveyed to the centrifugal disk 2. The heating pipes 114 are also provided on the diversion channels 113 of the classifying sieve 11. The heating pipes 114 heat the powder obtained after sieving before output, serving the preheating function, so it is possible to preheat the lunar soil powder to 100°C to 600°C, thereby reducing internal stress, and further reducing a temperature difference during the forming process.

Step S2: The lunar soil powder is subjected to centrifugal pressurization via the centrifugal disk 2 and subsequently conveyed through the discharge outlet 23 to the specified machining position at the fixed coordinates.

In Step S2, a linear velocity of the lunar soil powder is increased by the high centrifugal force of the centrifugal disk 2. When the operational speed reaches a stable operating condition, the powder is discharged through the tangentially positioned discharge outlet 23 into the powder feeding tube 3. The process of sustained, stable high-speed centrifugal pressurization ensures that the powder is ejected from the nozzle 31 at the terminal end of the powder feeding tube 3 to the fixed coordinates (predetermined three-dimensional coordinates). Delivering the powder to the fixed coordinates may reduce the margin of error in the amount of powder delivered and enhance the continuity and stability of the powder delivery process.

Step S3: The worktable 4 moves along a X-Y direction to the specified machining position, where synchronous additive manufacturing is performed at the fixed coordinates through the high-energy beam.

In Step S3, the worktable 4 is capable of performing a three-dimensional movement (i.e., along the X-axis, Y-axis, and Z-axis directions) in accordance with a path planning of a STL file. The worktable 4 moves in real-time to the specified machining position in the horizontal plane along the X-axis and Y-axis directions, thereby forming a relative path with respect to the fixed powder delivery coordinates that complies with the path planning of the STL file. The STL file is a pre-designed three-dimensional model of a printed component, creating a contour of each layer slice with a layer thickness of 0.05mm to 0.15mm. A contour path is generated using an equidistant offset algorithm, based on slice contour boundaries, resulting in a closed path. This path ensures that the powder delivery nozzle can precisely deliver powder along contour edges, forming the contour of each layer slice. Within the contour, the path planning fills the interior of the contour using parallel straight lines, with a spacing of 0.1mm to 0.2mm between lines. The type of high-energy beams, light spot sizes, and synchronized input energy are designed based on the melting point and degradation temperature of the lunar soil powder. Excessively high temperature may lead to the vaporization of low-boiling-point components, causing porosity defects and reducing the strength of lunar soil components, whereas insufficient temperature makes it difficult to melt high-melting-point components. Types of high-energy beams may include one or a combination of the following: laser, electron beam, electric arc, concentrated solar light, or microwaves. The first light spot of the high-energy beam is provided for real-time preheating during processing, thereby reducing the temperature gradient with the focal point of the smaller light spot. The first light spot has a size ranging from 1mm to 40mm. The second light spot of the high-energy beam is provided for agglomeration and melting processing, with a light spot size ranging from 100µm to 1000µm. The collaborative process parameters of the high-energy beam include the fill power, the number of scans within the same area, the scan spacing, the filling speed, and the layer thickness, among others.

Step S4: Upon the completion of the deposition of a layer of the lunar soil powder, the worktable 4 is lowered by the thickness of one layer. The above steps are repeated to accomplish the additive manufacturing of the entire component to be processed.

In some embodiments, the step of performing synchronous additive manufacturing at the fixed coordinates through the high-energy beam includes: performing real-time preheating of the worktable 4 or the deposited layer of the lunar soil powder through the first light spot, performing agglomeration and melting processing of the lunar soil powder through the second light spot; the diameter of the first light spot is 1mm to 40mm, and the diameter of the second light spot is 0.1mm to 1mm. Preferred parameters: the first light spot has a size of 3mm, and an energy melting ratio (EMR) output of 10; the second light spot has a size of 400µm, and an EMR output of 100.

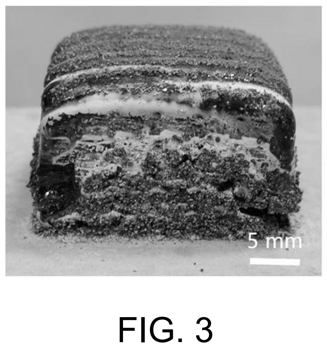

As illustrated in FIG. 3, the printed part produced using the additive manufacturing method under lunar conditions exhibits an internal cross-section devoid of any voids, collapses, or cracks. This effectively addresses the challenge of powder delivery difficulties encountered in the additive manufacturing process within the low-gravity and high-vacuum environment of the lunar surface.

The above description is only a preferred embodiment of the present disclosure and is not intended to limit the present disclosure. Any modifications, equivalent substitutions, improvements, and so on made within the spirit and principles of the present disclosure should be included within the scope to be protected by the present disclosure.

## Claims

1. A device for additive manufacturing in a lunar environment, comprising a frame, a vibration component, a centrifugal disk, a powder feeding tube, a worktable and a high-energy beam device, wherein:
the vibration component comprises a classifying sieve and a vibration motor, the classifying sieve is fixed on the frame, the vibration motor is mounted on a side surface of the classifying sieve;
the centrifugal disk is fixed on the frame and located below the classifying sieve, configured to receive lunar soil powder separated by the classifying sieve, the centrifugal disk is provided with a discharge outlet connected to the powder feeding tube along a tangential direction;
the powder feeding tube is configured to provide the separated lunar soil powder to a specified machining position at fixed coordinates;
the worktable is moveable along an X-axis direction, a Y-axis direction and a Z-axis direction in order to be positioned at the specified machining position;
the high-energy beam device is located above the worktable and is configured to emit a high-energy beam to perform synchronous additive manufacturing on the lunar soil powder on the worktable.

2. The device for additive manufacturing in the lunar environment according to claim 1, wherein the high-energy beam device is able to emit a first light spot and a second light spot, the first light spot has a diameter of 1mm to 40mm, provided for real-time preheating of the worktable or a deposited layer of the lunar soil powder, the second light spot has a diameter of 0.1mm to 1mm, provided for agglomeration and melting processing of the lunar soil powder.

3. The device for additive manufacturing in the lunar environment according to claim 2, wherein an output range of an energy melting ratio of the high-energy beam is 0.1 to 1000, wherein the energy melting ratio is a ratio of a high-energy beam energy density to an energy required for melting the lunar soil powder per unit volume.

4. The device for additive manufacturing in the lunar environment according to claim 1, wherein two of the vibration motors are provided, and the two vibration motors are symmetrically mounted on both sides of the classifying sieve with opposite rotation directions.

5. The device for additive manufacturing in the lunar environment according to claim 4, wherein the classifying sieve comprises a sieve frame and a plurality of sieve meshes, the plurality of sieve meshes are arranged from top to bottom along an inner wall of the sieve meshes, a diameter of the upper sieve mesh is larger than a diameter of the lower sieve mesh, the sieve frame is provided with a waste material outlet, and the waste material outlet is located above the uppermost sieve mesh.

6. The device for additive manufacturing in the lunar environment according to claim 5, wherein the classifying sieve further comprises diversion channels and heating pipes provided in the same number as that of the sieve meshes, the diversion channels are provided on an outer wall of the sieve frame and communicate with an interior of the sieve frame, the diversion channels are located below the corresponding sieve meshes to separate the lunar soil powder of different particle sizes, wherein one of the diversion channels is connected to the centrifugal disk, and the heating pipes are mounted by sleeving on an exterior of the diversion channels.

7. The device for additive manufacturing in the lunar environment according to claim 6, wherein the diameter of the sieve mesh is 10um to 500um, and an inclination angle of the sieve mesh with respect to a horizontal plane is 0 degree to 60 degrees.

8. The device for additive manufacturing in the lunar environment according to claim 1, wherein the centrifugal disk comprises a turntable, a feeding inlet and the discharge outlet, a centrifugal chamber is provided inside the turntable, the feeding inlet is located at a center of a top of the turntable and communicates with the centrifugal chamber, the feeding inlet is connected with an outlet of the classifying sieve, the discharge outlet is located at an outer edge of the turntable, the discharge outlet is provided with a switch, the switch is configured to open the discharge outlet after the turntable reaches an operational speed.

9. A method for additive manufacturing in a lunar environment, using the device for additive manufacturing in the lunar environment according to claim 1, comprising:
the vibration motor actuates the classifying sieve to induce vibrations, thereby enabling the classifying sieve to sieve raw lunar soil or simulated lunar soil, thereby quantitatively conveying the lunar soil powder of specified particle sizes to the centrifugal disk;
the lunar soil powder is subjected to centrifugal pressurization via the centrifugal disk and subsequently conveyed through the discharge outlet to the specified machining position at the fixed coordinates;
the worktable moves along a X-Y direction to the specified machining position, where synchronous additive manufacturing is performed at the fixed coordinates through the high-energy beam;
upon completion of deposition of a layer of the lunar soil powder, the worktable is lowered by a thickness of one layer, the above steps are repeated to accomplish the additive manufacturing of an entire component to be processed.

10. The method for additive manufacturing in the lunar environment according to claim 9, wherein the step of performing the synchronous additive manufacturing at the fixed coordinates through the high-energy beam comprises: performing real-time preheating of the worktable or the deposited layer of the lunar soil powder through the first light spot, performing agglomeration and melting processing of the lunar soil powder through the second light spot, the diameter of the first light spot is 1mm to 40mm, and the diameter of the second light spot is 0.1mm to 1mm.

11. A method for additive manufacturing in a lunar environment, using the device for additive manufacturing in the lunar environment according to claim 2, comprising:
the vibration motor actuates the classifying sieve to induce vibrations, thereby enabling the classifying sieve to sieve raw lunar soil or simulated lunar soil, thereby quantitatively conveying the lunar soil powder of specified particle sizes to the centrifugal disk;
the lunar soil powder is subjected to centrifugal pressurization via the centrifugal disk and subsequently conveyed through the discharge outlet to the specified machining position at the fixed coordinates;
the worktable moves along a X-Y direction to the specified machining position, where synchronous additive manufacturing is performed at the fixed coordinates through the high-energy beam;
upon completion of deposition of a layer of the lunar soil powder, the worktable is lowered by a thickness of one layer, the above steps are repeated to accomplish the additive manufacturing of an entire component to be processed;
preferably
wherein the step of performing the synchronous additive manufacturing at the fixed coordinates through the high-energy beam comprises: performing real-time preheating of the worktable or the deposited layer of the lunar soil powder through the first light spot, performing agglomeration and melting processing of the lunar soil powder through the second light spot, the diameter of the first light spot is 1mm to 40mm, and the diameter of the second light spot is 0.1mm to 1mm.

12. A method for additive manufacturing in a lunar environment, using the device for additive manufacturing in the lunar environment according to claim 3, comprising:
the vibration motor actuates the classifying sieve to induce vibrations, thereby enabling the classifying sieve to sieve raw lunar soil or simulated lunar soil, thereby quantitatively conveying the lunar soil powder of specified particle sizes to the centrifugal disk;
the lunar soil powder is subjected to centrifugal pressurization via the centrifugal disk and subsequently conveyed through the discharge outlet to the specified machining position at the fixed coordinates;
the worktable moves along a X-Y direction to the specified machining position, where synchronous additive manufacturing is performed at the fixed coordinates through the high-energy beam;
upon completion of deposition of a layer of the lunar soil powder, the worktable is lowered by a thickness of one layer, the above steps are repeated to accomplish the additive manufacturing of an entire component to be processed;
preferably
wherein the step of performing the synchronous additive manufacturing at the fixed coordinates through the high-energy beam comprises: performing real-time preheating of the worktable or the deposited layer of the lunar soil powder through the first light spot, performing agglomeration and melting processing of the lunar soil powder through the second light spot, the diameter of the first light spot is 1mm to 40mm, and the diameter of the second light spot is 0.1mm to 1mm.

13. A method for additive manufacturing in a lunar environment, using the device for additive manufacturing in the lunar environment according to claim 4, comprising:
the vibration motor actuates the classifying sieve to induce vibrations, thereby enabling the classifying sieve to sieve raw lunar soil or simulated lunar soil, thereby quantitatively conveying the lunar soil powder of specified particle sizes to the centrifugal disk;
the lunar soil powder is subjected to centrifugal pressurization via the centrifugal disk and subsequently conveyed through the discharge outlet to the specified machining position at the fixed coordinates;
the worktable moves along a X-Y direction to the specified machining position, where synchronous additive manufacturing is performed at the fixed coordinates through the high-energy beam;
upon completion of deposition of a layer of the lunar soil powder, the worktable is lowered by a thickness of one layer, the above steps are repeated to accomplish the additive manufacturing of an entire component to be processed;
preferably
wherein the step of performing the synchronous additive manufacturing at the fixed coordinates through the high-energy beam comprises: performing real-time preheating of the worktable or the deposited layer of the lunar soil powder through the first light spot, performing agglomeration and melting processing of the lunar soil powder through the second light spot, the diameter of the first light spot is 1mm to 40mm, and the diameter of the second light spot is 0.1mm to 1mm.

14. A method for additive manufacturing in a lunar environment, using the device for additive manufacturing in the lunar environment according to claim 5, comprising:
the vibration motor actuates the classifying sieve to induce vibrations, thereby enabling the classifying sieve to sieve raw lunar soil or simulated lunar soil, thereby quantitatively conveying the lunar soil powder of specified particle sizes to the centrifugal disk;
the lunar soil powder is subjected to centrifugal pressurization via the centrifugal disk and subsequently conveyed through the discharge outlet to the specified machining position at the fixed coordinates;
the worktable moves along a X-Y direction to the specified machining position, where synchronous additive manufacturing is performed at the fixed coordinates through the high-energy beam;
upon completion of deposition of a layer of the lunar soil powder, the worktable is lowered by a thickness of one layer, the above steps are repeated to accomplish the additive manufacturing of an entire component to be processed;
preferably
wherein the step of performing the synchronous additive manufacturing at the fixed coordinates through the high-energy beam comprises: performing real-time preheating of the worktable or the deposited layer of the lunar soil powder through the first light spot, performing agglomeration and melting processing of the lunar soil powder through the second light spot, the diameter of the first light spot is 1mm to 40mm, and the diameter of the second light spot is 0.1mm to 1mm.

15. A method for additive manufacturing in a lunar environment, using the device for additive manufacturing in the lunar environment according to claim 6, comprising:
the vibration motor actuates the classifying sieve to induce vibrations, thereby enabling the classifying sieve to sieve raw lunar soil or simulated lunar soil, thereby quantitatively conveying the lunar soil powder of specified particle sizes to the centrifugal disk;
the lunar soil powder is subjected to centrifugal pressurization via the centrifugal disk and subsequently conveyed through the discharge outlet to the specified machining position at the fixed coordinates;
the worktable moves along a X-Y direction to the specified machining position, where synchronous additive manufacturing is performed at the fixed coordinates through the high-energy beam;
upon completion of deposition of a layer of the lunar soil powder, the worktable is lowered by a thickness of one layer, the above steps are repeated to accomplish the additive manufacturing of an entire component to be processed.
preferably,
wherein the step of performing the synchronous additive manufacturing at the fixed coordinates through the high-energy beam comprises: performing real-time preheating of the worktable or the deposited layer of the lunar soil powder through the first light spot, performing agglomeration and melting processing of the lunar soil powder through the second light spot, the diameter of the first light spot is 1mm to 40mm, and the diameter of the second light spot is 0.1mm to 1mm.
